# EUROPÄISCHE PATENTSCHRIFT

(11) **EP 1 405 999 B1**
(45) Veröffentlichungstag und Bekanntmachung des Hinweises auf die Patenterteilung: **30.04.2008**
(21) Anmeldenummer: 03015721.8
(22) Anmeldetag: 10.07.2003
(51) Int. Cl.: F02D 41/02, F02D 41/14, F01N 3/08, F01N 9/00

(54) **Verfahren zum Betreiben einer Brennkraftmaschine sowie die Brennkraftmaschine selbst**
Method for operating an internal combustion engine and corresponding internal combustion engine
Procédé pour le fonctionnement d'un moteur à combustion interne et ledit moteur à combustion interne

(30) Priorität: 05.10.2002 DE 10246505
(43) Veröffentlichungstag der Anmeldung: 07.04.2004
(73) Patentinhaber: ROBERT BOSCH GMBH, 70442 Stuttgart (DE)
(72) Erfinder: Wagner, Jens, 70182 Stuttgart (DE); Kufferath, Andreas, 71706 Markgroeningen (DE); Ricken, Volker, 71706 Markgroeningen (DE)

(56) Entgegenhaltungen:
- EP-A- 0 899 430
- WO-A-02/075138
- US-B1- 6 267 937

## Beschreibung

### Stand der Technik

Die Erfindung betrifft ein Verfahren zum Betreiben einer Brennkraftmaschine mit einem Kraftstoffeinspritzsystem und einem Abgassystem mit mindestens einem Katalysator zur Abgasreinigung. Speziell wird hier auf eine Brennkraftmaschine mit Benzin-Direkteinspritzung und einer Abgasanlage mit einem Drei-Wege-Katalysator sowie einem NOₓ-Speicherkatalysator eingegangen. Zum Heizen zumindest des NOₓ-Speicherkatalysators ist vorgesehen, die Brennkraftmaschine zyklisch im Magerbetrieb mit λ > 1, um den Sauerstoffspeicher der Katalysatoren aufzufüllen und im fetten Betrieb mit λ < 1 zu betreiben, um durch die Reaktionswärme der Reaktion nicht verbrannter Kraftstoffkomponenten mit dem Sauerstoff in den Katalysatoren diese aufzuheizen.

Motoren mit Kraftstoffdirekteinspritzung, insbesondere Ottomotoren mit Benzindirekteinspritzung, werden zur Minimierung des Kraftstoffverbrauchs und damit auch zur Minimierung der CO₂-Emissionen vielfach im Magerbetrieb mit λ > 1 betrieben. D. h., das vorhandene Luft/Kraftstoffgemisch weicht von dem theoretisch notwendigen Massenverhältnis von ca. 14,7:1 ab, das einem Lambda von 1, nämlich dem stöchiometrischen Verbrennungsverhältnis entspricht.

Wird ein derartiger Motor mit Ladungsschichtung betrieben, so können aufgrund der dort herrschenden Verbrennungsverhältnisse und der Anfettung des Gemisches, so dass es im Bereich der Zündkerze zündfähig ist, im Teillastbereich Luftzahlen bis zu λ = 4 erreicht werden.

Dabei wird insbesondere im Leerlauf bzw. im Teillastbetrieb der Motor im Schichtbetrieb betrieben, da hierbei der motorische Wirkungsgrad höher als bei stöchiometrischem Motorbetrieb ist.

Bei einem Magerbetrieb ist stets ein Sauerstoffüberschuss im Abgassystem vorhanden. Aus diesem Grund können Stickoxide (NOₓ), die in den Abgasen enthalten sind, während des Magerbetriebs der Brennkraftmaschine nicht im Drei-Wege-Katalysator reduziert werden. Um die Abgabe derartiger Stickoxide an die Umgebungsatmosphäre zu verhindern, ist es daher vorgesehen, diese in einem NOₓ-Speicherkatalysator aufzufangen und periodisch mit Reduktionsmittel zu reduzieren. Dieser Vorgang wird nachfolgend mit Regeneration des NOₓ-Speicherkatalysators bezeichnet. Ein derartiges Abgassystem, bei dem ein motornaher Drei-Wege-Katalysator und stromabwärts ein NOₓ-Speicherkatalysator eingesetzt werden, ist aus dem Stand der Technik bekannt.

Die in der Motortechnik eingesetzten Katalysatoren haben neben einem eingeschränkten Lambda-Bereich, in dem sie arbeiten, oft auch nur ein eingeschränktes Temperaturbetriebsfenster. Diese Betriebsfenster sind darüber hinaus für den Drei-Wege-Katalysator und für den NOₓ-Speicherkatalysator unterschiedlich. Während der Drei-Wege-Katalysator Schadstoffkomponenten über ein großes Temperaturfenster reduzieren und oxidieren kann, ist dieser Temperaturbereich für den NOₓ-Speicherkatalysator stark eingeschränkt. Eine Abgasreinigungsanlage wird daher üblicherweise so ausgelegt, dass beide Katalysatoren für weite Motorbetriebsbereiche im Betriebstemperaturfenster liegen. Droht einer der Katalysatoren seine untere Betriebsgrenztemperatur zu unterschreiten, so sind Heizmaßnahmen notwendig. Es können dabei Heizmaßnahmen für nur einen der beiden Katalysatoren notwendig werden.

Typischerweise liegt das Betriebsfenster eines 3-Wege-Katalysators bei höheren Temperaturen als das eines NOx-Speicherkatalysators. Die Abgasanlage wird normalerweise so ausgelegt, dass durch Wärmeverluste zwischen 3-Wege-Katalysator und NOx-Speicherkatalysator beide Betriebsfenster sicher eingestellt sind.

Darüber hinaus müssen NOₓ-Speicherkatalysatoren periodisch entschwefelt werden. Die aktiven Zentren der NOₓ-Speicherkatalysatoren besitzen neben ihrer Affinität für NOₓ auch eine hohe Affinität für Schwefeloxide (SOₓ). Diese entstehen ebenfalls bei der Verbrennung des Kraftstoffs und belegen primär die aktiven Zentren des Speicherkatalysators. Die dabei entstehenden Sulfate sind thermisch so stabil, dass sie bei normaler Betriebstemperatur des NOx-Speicherkats nicht freigesetzt werden können. Als Folge sinkt mit zunehmender Schwefelbeladung die Speicherfähigkeit des Katalysators für Stickoxide. Erst bei einer erhöhten Temperatur im Katalysator über 600° C und bei gleichzeitig reduzierenden Bedingungen (λ < 1) sind diese Sulfate thermodynamisch nicht mehr stabil und werden als Schwefelwasserstoff (H₂S) und als Schwefeldioxid (SO₂) freigesetzt. Um die NOₓ-Speicherfähigkeit zu erhalten bzw. wiederherzustellen und den Katalysator zu regenerieren, muss in bestimmten Abständen der Speicherkatalysator kurzzeitig fett bei erhöhten Temperaturen betrieben werden. Dafür muss der Speicherkatalysator im Fahrbetrieb auf ungefähr 650° C aufgeheizt werden.

Es existieren seither eine Reihe von Konzepten zum Heizen von Katalysatoren.

So ist es bekannt, heißes Motorabgas am Auslassventil zu erzeugen, z. B. durch späte Zündung oder eine Nacheinspritzung bei magerer Verbrennung, wie es beispielsweise in der EP 1 004 762 A1 beschrieben ist. Soll nur der stromabwärts angeordnete NOₓ-Speicherkatalysator aufgeheizt werden, so wird der stromaufwärts angeordnete Drei-Wege-Katalysator unnötigerweise geheizt. Dies führt zu einem erhöhten Kraftstoffverbrauch; außerdem sind - bedingt durch die Auslegung des Abgassystems - die Wärmeverluste auf dem Weg bis zum NOₓ-Speicherkatalysator sehr hoch. Im Extremfall einer Entschwefelung kann durch die maximal zulässige Temperatur des vorgeschalteten Drei-Wege-Katalysators ein Erreichen der notwendigen Temperatur im NOₓ-Speicherkatalysator sogar unmöglich werden.

Alternativ ist es möglich, unverbrannte Kohlenwasserstoffe sowie Kohlenmonoxid und Wasserstoff durch einen fetten Motorbetrieb zu erzeugen. Diese oxidierbaren Abgaskomponenten werden im NOₓ-Speicherkatalysator mit Hilfe von dort eingespeicherten Sauerstoffs unter Freisetzung von Wärme umgesetzt. Ein entsprechendes Heizverfahren ist beispielsweise in der WO 98/46868 beschrieben. Hierdurch ist ein sehr effizientes Aufheizen möglich, da die Heizmaßnahme ohne größere vorherige Wärmeverluste im NOₓ-Speicherkatalysator wirkt, während stromaufwärts liegende abgasführende Bauteile wie Auslassventil, Abgaskrümmer und Vorkatalysator nicht bzw. nur in geringem Maße thermisch belastet werden.

Dabei gibt es für eine effiziente chemische Heizung des NOₓ-Speicherkatalysators im Wesentlichen drei Möglichkeiten:
- Bei einer Y-Abgasanlage können die einzelnen Zylinder bankweise fett bzw. mager betrieben werden. Liegt der NOₓ-Speicherkatalysator erst nach der Y-Zusammenführung und wird eine gute Vermischung der beiden Abgasströme sichergestellt, kann er auf diese Weise aufgeheizt werden. Ein derartiges Verfahren ergibt sich beispielsweise aus der DE 195 22 165 C2.
- Weiterhin kann vorgesehen sein, den Motor in der Summe fett zu betreiben, während vor dem NOₓ-Speicherkatalysator zusätzlich Luft eingeleitet wird. Ein derartiges Verfahren ergibt sich beispielsweise aus der DE 197 47 222 C1.
- Schließlich kann abwechselnd fettes und mageres Abgas erzeugt werden, was beispielsweise durch die WO 98/46868 offenbart wird. Dabei wird die Sauerstoffspeicherfähigkeit der Katalysatoren ausgenutzt. In der Magerphase wird der Sauerstoffspeicher gefüllt, wohingegen in der Fettphase der Sauerstoffspeicher des Katalysators aufgebraucht wird. Durch die Reaktion mit den Abgaskomponenten Kohlenwasserstoffe, Kohlenmonoxid und Wasserstoff wird der Heizwert dieser Substanzen freigesetzt und damit der NOₓ-Speicherkatalysator aufgeheizt. Diese letzte Methode ist unabhängig von der Bauform oder zusätzlichen Komponenten, wie beispielsweise die Förderung von Zusatzluft durch eine Pumpe.

Die Erfindung baut auf diesem Verfahren auf.

In der WO 98/46868 wird ein Prinzip beschrieben, einen Katalysator mit variierendem Lambda aufzuheizen. Hierbei wird vorgeschlagen, die Fett-/Magerphasen derart einzustellen, dass kein Fett-/Magerdurchbruch hinter dem NOₓ-Speicherkatalysator erfolgt.

Der Erfindung stellt sich nun die Aufgabe, ein verbessertes Heizverfahren bereitzustellen, bei dem die Fett- und Magerphasen an die tatsächlichen Bedingungen im NOₓ-Speicherkatalysator beispielsweise bezüglich Alterung, Temperatur, etc. angepasst sind und somit Durchbrüche der Phasen durch den Katalysator noch besser vermieden werden können.

Die Erfindung löst diese Aufgabe durch ein Verfahren sowie eine Brennkraftmaschine, bei der die Fett- und/oder Magerphasen zyklisch während des Heizens durch den Katalysator durchbrechen und die Länge und/oder Intensität der Fett- und/oder Magerphasen nach den Katalysatoren im Abgasstrom über einen Sauerstoffsensor, der hinter und/oder zwischen den Katalysatoren im Abgasstrom angeordnet ist, bestimmt werden und über die Anpassung der Phasendauer, die Amplitude des Luft-/kraftstoffverhältnisses und/oder die Absteuerung der Phasen im zeitlichen Mittel ein konstantes λ eingeregelt wird. Aufgrund dieser Regelstrategie und die aktuelle Anpassung beispielsweise an die Alterung der Sauerstoffspeicherfähigkeit der Katalysatoren kann eine Verschlechterung der Emissionen verhindert werden. Darüber hinaus können auf diese Weise Fett-/Magerdurchbrüche im Heizverfahren weitgehend vermieden werden. Ein Heizen des Katalysators findet dabei in der Größenordnung von mehr als 500 Fahrkilometern, in der Regel zwischen 1.000 und 10.000 Fahrkilometern, abhängig beispielsweise von der Kraftstoffqualität statt. Durch die unterstützende Regelung der Aufheizung während des Heizverfahrens, das ca. 4 Minuten benötigt, aber gegebenenfalls auch schneller ablaufen kann, können während des normalen Heizbetriebs Fett-/Magerdurchbrüche weitgehend vermieden werden.

Dabei hat die zeitliche Länge der Fett-/Magerphasen einen Einfluss auf den Ort der chemischen Reaktion. So werden bei sehr kurzen Zeiten die gesamten Energien in den vorderen Zonen der Katalysatoren freigesetzt. Bei sehr langen Zeiten können die vollständigen Reaktionen nicht mehr in den Katalysatoren ablaufen, so dass es zu Fett- bzw. Magerdurchbrüchen kommt. Weiterhin werden sehr unterschiedliche Temperaturprofile in den Katalysatoren ausgebildet.

Erfolgt aufgrund von fehlerhafter Steuerung die Reaktion nur in den vorderen Zonen, ist die Gefahr einer Katalysatorschädigung sehr hoch. Da durch einen sehr schnellen Wechsel zwischen den Fett- und Magerphasen die gleiche chemische Energie eingetragen werden kann, diese dann jedoch nur im vorderen Bereich des Katalysators frei wird, entsteht eine Überhitzung des Katalysators und dieser kann thermisch geschädigt werden. In diesem Fall ist die Vorsteuerung von einer Temperaturerhöhung ausgegangen, die bei einer Reaktion über das gesamte Katalysatorvolumen entsteht. Eine Reaktion im vorderen Teil der Katalysatoren wird aber eine größere Temperaturerhöhung in diesem Bereich zur Folge haben.

Eine Reaktion über die gesamte Lauflänge hat ein monoton ansteigendes Temperaturprofil zur Folge. Da aber ein eher konstantes Temperaturprofil sinnvoll ist, muss die Lage der Reaktionszone über die absolute Menge von überschüssigem Sauerstoff und brennbarem Abgasbestandteilen je Phase eingestellt werden.

Im Betrieb kann eine Brennkraftmaschine im wesentlichen in drei Betriebsarten betrieben werden. Sie kann dabei im Magerbetrieb laufen, um Kraftstoff einzusparen. In diesem Betriebsfenster werden Stickoxide in den NOₓ-Speicherkatalysator eingespeichert. Die Brennkraftmaschine kann weiterhin im stöchiometrischen Bereich, also bei λ = 1, arbeiten, zum optimalen Betrieb des Drei-Wege-Katalysators und in einem fetten Betriebsbereich, in dem der NOₓ-Speicherkatalysator von den gespeicherten NOₓ-Stickoxiden gereinigt wird und die maximale Leistung des Motors erzielbar ist.

Darüber hinaus kann gemäß der Erfindung vorgesehen sein, die Brennkraftmaschine in einem zyklischen Modus zu betreiben, in dem Magerphasen und Fettphasen einander abwechseln. Durch diesen Modus wird eine Aufheizung des NOₓ-Speicherkatalysators und/oder des Drei-Wege-Katalysators erreicht, um diesen von seiner Beladung mit Schwefel zu regenerieren.

Im Magerbetrieb wird durch die Motorsteuerung die Brennkraftstoffmenge auf weniger als für die stöchiometrische Verbrennung erforderlich herabgesetzt. Der Drei-Wege-Katalysator arbeitet als Oxidationskatalysator und bringt einen Teil des Sauerstoffs mit nicht verbrannten Kraftstoffkomponenten zur Reaktion. Der darüber hinausgehende Teil des Sauerstoffs bricht durch den Drei-Wege-Katalysator hindurch, sofern er nicht in diesem gespeichert wird und strömt zu dem NOₓ-Speicherkatalysator, wo er ebenfalls den Speicher belegt. Die Stickoxide, die in dem NOₓ-Speicherkatalysator gespeichert sind, werden in regelmäßigen Abständen reduziert, indem die Brennkraftmaschine so gesteuert wird, dass unverbrannte Kraftstoffkomponenten durch den Drei-Wege-Katalysator hindurchbrechen und zu dem NOₓ-Speicherkatalysator gelangen, wodurch eine Regenerierung des NOₓ-Speicherkatalysators erfolgt.

Auch im stöchiometrischen Betrieb wird, um eine sichere Funktion des Drei-Wege-Katalysators sicherzustellen, das Lambda-Verhältnis zwischendurch moduliert, d. h. in die eine oder andere Richtung des stöchiometrischen Verhältnisses verschoben. Dadurch kann bereits eine geringfügige Aufwärmung des Drei-Wege-Katalysators erzeugt werden. Grundsätzlich ist es im stöchiometrischen Betrieb nicht notwendig, den NOₓ-Speicherkatalysator zu regenerieren, da im wesentlichen die Stickoxide bereits im Drei-Wege-Katalysator reduziert werden.

Im fetten Betrieb, wie er beispielsweise bei Volllast vorliegen kann, erreichen unverbrannte Komponenten (HC/CO) sowohl den Drei-Wege-Katalysator als auch den NOₓ-Speicherkatalysator. Hierdurch wird der NOₓ-Speicherkatalysator von den Stickoxiden gereinigt, d. h. diese werden im Speicherkatalysator reduziert. Eine Temperaturerhöhung findet im reinen fetten Betrieb nicht statt, da sich nicht in ausreichender Weise Sauerstoff in den Speicherkatalysatoren befindet und kein weiteres Frischgas durch das Abgas zugeführt wird.

Um den NOₓ-Speicherkatalysator nun von der Belegung mit Schwefel zu reinigen, ist eine Erhöhung der Temperatur im Katalysator in erheblicher Weise auf ungefähr 650° C notwendig. Hierzu wird die Brennkraftmaschine zyklisch wechselnd in kurzen Zeitabständen mit einem mageren und einem fetten Lambda betrieben, wobei die Amplitude der Modulation hundert mal größer sein kann, als die Modulation während des Betriebs im stöchiometrischen Verhältnis.

Es soll während des Aufheizens möglichst verhindert werden, dass es zu Fett- bzw. Magerdurchbrüchen hinter dem NOₓ-Speicherkatalysator kommt, da sich hierdurch die Emissionen deutlich verschlechtern.

Bei dem erfindungsgemäßen Verfahren laufen nun, ebenso wie im Stand der Technik, abwechselnd Zonen mit Sauerstoffüberschuss und hohem NOₓ-Anteil (Magerphase) oder unverbranntem Kohlenmonoxid, Kohlenwasserstoffen und Wasserstoff (Fettphase) durch das Abgassystem während des Aufheizens des NOₓ-Speicherkatalysators. Dabei wird der Sauerstoff aus der Magerphase in die Katalysatoren eingespeichert. Mit diesem Sauerstoff werden dann in der folgenden Fettphase teil- und unoxidierte Abgaskomponenten oxidiert und dabei Wärme freigesetzt.

Es kann hierbei vorgesehen sein, dass eine Vorsteuerung der Lambda-Amplitude abhängig von der benötigten Heizleistung vorgesehen ist. Da während der Magerphase die Katalysatoren auskühlen, muss diese Phase in jedem Betriebspunkt möglichst mit maximalem Lambda und kürzester Zeitdauer gefahren werden. Unter maximalem Lambda wird hierbei ein möglichst mageres Lambda verstanden, das noch einen sicheren Betrieb der Brennkraftmaschine sicherstellt.
Hierzu kann beispielsweise ein Betriebsartenwechsel vom Homogenbetrieb für die Fettphase in den Schichtbetrieb für die Magerphase notwendig werden. Das Lambda während der Fettphase wird dann abhängig von der benötigten Heizleistung eingestellt. Die zeitliche Vorsteuerung der Fett- bzw. Magerphasen wird idealerweise derart gestaltet, dass der absolute Sauerstoff-Überschuss der Magerphase und der absolute Sauerstoff-Bedarf der Fettphase in einem festen Verhältnis zueinander stehen. Dieses Verhältnis bestimmt das Abgaslambda nach der Reaktion aller Komponenten der einzelnen Phasen miteinander.

Speziell wird für die zeitliche Vorsteuerung der relative Sauerstoff-Überschuss oder Sauerstoff-Bedarf mit dem aktuellen Abgasmassenstrom multipliziert und dieses Produkt über die Zeit aufintegriert. Erreicht der so gebildete Wert einen Schwellwert, so muss die Phase gewechselt werden.

Der Schwellwert wird abhängig von der aktuellen Sauerstoff-Speicherfähigkeit der Katalysatoren bestimmt. Diese kann abhängig von einzelnen Parametern wie Alter und Temperatur modelliert, und/oder durch erzwungene Durchbrüche von Sauerstoff oder Fettgas gemessen werden.

Für die erfindungsgemäß vorgesehene regelnde Messung der Sauerstoffspeicherfähigkeit, die ca. alle 200 Zyklen während des Heizverfahrens durchgeführt wird, ist es notwendig, dass ein Fett- und/oder Magerdurchbruch hinter den Katalysatoren messbar ist. Es kann hierbei vorgesehen sein, dass die Vorsteuerung gegen Ende der Fett- oder der Magerphase einen Lambda-Wert einstellt, der näher am stöchiometrischen Verhältnis liegt als zu Beginn der Fett- bzw. Magerphase. Hierdurch hat die zeitliche Länge der Phasen einen geringeren Einfluss auf die Emissionen. Da es als hartes Kriterium angesehen wird, dass der Fahrer eines Kraftfahrzeugs das Heizverfahren des Katalysators nicht am Fahrverhalten des Kraftfahrzeugs spürt, ist es möglich, dass nicht zum optimalen Zeitpunkt eine Umschaltung zwischen Fett und Mager erfolgen kann, um keine Leistungsbeeinträchtigungen spürbar werden zu lassen. Derartigen Leistungsbeeinträchtigungen kann darüber hinaus auch durch die Veränderung des Zündungstimings entgegengewirkt werden.

Es kann also zum Teil notwendig sein, mit dem Umschaltzeitpunkt abzuwarten, bis ein günstigerer Moment bezüglich der Fahranforderungen gegeben ist. Um in diesem Zeitraum die Emissionen nicht zu verschlechtern, kann die oben beschriebene Absteuerung des Motorlambdas vorgenommen werden. Eine entsprechende Messung der Lambda-Ergebnisse durch den Sauerstoffsensor bleibt hiervon jedoch unbeeinträchtigt.

D. h., auch wenn die Zeitdauer der Fett-/Magerphasen nicht genau einstellbar ist, z. B. aufgrund eines notwendigen Betriebsartenwechsels, kann die Absteuerung helfen, die Emissionen zu minimieren. In diesem Fall ist eine zweite stärkere Absteuerung denkbar. Im Idealfall wird durch die Regelung dann ein stöchiometrisches Lambda angefahren, um bis zur Umschaltung die Emissionen zu verringern.

Die Regelung der Fett- bzw. Magerphasen erfolgt dabei unabhängig voneinander. Die Messung der Fett- und Magerphasen bezüglich ihrer Intensität erfolgt über einen Sauerstoffsensor hinter den beiden Katalysatoren.

Dabei ist die Sauerstoffspeicherfähigkeit, die tatsächlich in den Katalysatoren vorliegt, geringer als für die Vorsteuerung angenommen. Sie verringert sich weiter durch die Alterung der Katalysatoren. Durch diese Diskrepanz zeigt der Sauerstoffsensor kurze Fett- bzw. Magerzonen hinter den Katalysatoren an. Die Regelstrategie wird nun derart ausgelegt, dass die zeitliche Steuerung der Fettund Magerphasen derart angepasst wird, dass nur noch sehr kurze Fett- und Magerphasen hinter den Katalysatoren gemessen werden können. Dabei kann von der Länge bzw. Intensität der Pakete hinter den Katalysatoren direkt auf eine Anpassung der Phasen geschlossen werden. Es ist hierbei notwendig, dass die eigentlich zu vermeidenden Fett- bzw. Magerphasen hinter den Katalysatoren auftreten, um ein Regelsignal zu erzeugen. Es ist jedoch erwünscht, dass diese Durchbrüche so kurz wie möglich gehalten werden, da sie die Gesamtemission verschlechtern. Im Gegensatz zu einer ungeregelten Situation können die Durchbrüche jedoch über die gesamte Lebensdauer minimiert werden, ohne unnötige Sicherheitszuschläge kalkulieren zu müssen.

Die Regelung kann dabei dahingehend erfolgen, dass die Zeitdauer der entsprechenden Phasen verlängert oder verkürzt wird bzw. die Amplitude, d. h. das Luft-/Kraftstoffverhältnis der Phase, angepasst wird. Darüber hinaus kann über die Lambda-Vorsteuerung gegen Ende einer Phase abgesteuert werden, wobei auch die Regelung durch diese Absteuerung beeinflusst wird. Dies kann beispielsweise durch eine frühere oder stärkere Absteuerung erfolgen.

Durch eine geeignete Anpassung der Regelstrategie können jeweils die Fett- bzw. Magerdurchbrüche minimiert werden. Die Strategie richtet sich dabei nach den kritischen Abgaskomponenten, nämlich den Kohlenwasserstoffen und dem Kohlenmonoxid bei einem Fettdurchbruch bzw. den Stickoxiden bei einem Magerdurchbruch. Je nach Aufbau des Abgassystems kann hierbei die Regelstrategie variiert werden.

Es kann dabei vorgesehen sein, dass sowohl die Mager- als auch die Fettphasen zur Regelung herangezogen werden. Alternativ kann jedoch eine Regelung auch lediglich über die Fett- bzw. die Magerphasen alleine erfolgen. Dann wird nur der Durchbruch von Fettgas bzw. nur der Durchbruch von Sauerstoff erzwungen, um die Speicherfähigkeit zu messen.

Dabei erfolgt die zeitliche Regelung der Magerphasen abhängig von den gemessenen Magerpaketen hinter den Katalysatoren. Dadurch entspricht der eingetragene Sauerstoff genau der aktuellen Sauerstoffspeicherfähigkeit des oder der Katalysatoren. Die zeitliche Steuerung der Fettphasen wird entsprechend an den jeweils eingetragenen Sauerstoff angepasst. Ein Fettpaket hinter dem Katalysator ist daher zur Regelung nicht mehr notwendig und kann vermieden werden.

Wird über die Fettphasen zeitlich geregelt, so erfolgt diese abhängig von den gemessenen Fettpaketen hinter dem oder den Katalysator(en). Es kann damit auf den reduzierten Sauerstoff geschlossen werden. Die zeitliche Steuerung der Magerphasen wird so ausgelegt, dass nur diese Sauerstoffmenge wieder ersetzt wird. Dadurch wird ein Magerpaket hinter den Katalysatoren nicht mehr zur Regelung notwendig und kann verhindert werden.

Zusätzlich zu der Regelung kann vorgesehen sein, dass das Sauerstoffspeichermodell für die Katalysatoren adaptiert wird. Die Vorsteuerung der Fett- bzw. Magerphasen erfolgt auf Basis einer modellierten Sauerstoffspeicherfähigkeit. Hierbei kann vorgesehen sein, dass der Reglerhub zur Korrektur des aktuellen Modells herangezogen wird. Hierbei kann z. B. eine alterungsbedingte Abnahme der Sauerstoffspeicherfähigkeit über die Lebensdauer des NOₓ-Speicherkatalysators berücksichtigt werden.

Weiterhin kann vorgesehen sein, dass ein weiterer Sauerstoffsensor zwischen den Katalysatoren verwendet wird, um die Sauerstoffspeicherfähigkeit des ersten Katalysators zu messen und damit die zeitliche Länge der Phasen zu regeln. Schließlich kann das Abgaslambda während der Zyklen durch einen Sauerstoffsensor im Abgasstrang geregelt werden.

Insgesamt kann auch durch die Regelung auf Fett- und/oder Magerdurchbrüche sichergestellt werden, dass im Speicherkatalysator jedes Fettpaket eine chemische Reaktion nur in einem Teil des Speicherkatalysators verursacht. Hierbei kann bei einem ungeschädigten Katalysator sichergestellt werden, dass über diesen Teilbereich ein stetig ansteigender Temperaturanstieg gegeben ist. Insbesondere, da der heißeste Bereich des Katalysators am Ende dieses Teilbereichs liegt, kann hier die Temperatur auf einfache Weise über einen Temperatursensor gemessen und damit die Maximaltemperatur im Katalysator bestimmt werden. Sofern zusätzlich ein Temperatursensor eingesetzt wird, kann eine Schädigung des Katalysators durch zu hohe Temperaturen auf einfache Weise vermieden werden.

Die Erfindung betrifft des weiteren ein Computerprogramm zur Durchführung des vorstehend beschriebenen Verfahrens, sofern es auf einem Computer ausgeführt wird. Das Computerprogamm kann dabei insbesondere auf einem Speicher, nämlich einem Read-only-Memory oder Flash-Memory, abgespeichert sein.

Des weiteren betrifft die Erfindung ein Steuer- und/oder Regelgerät zum Betreiben einer Brennkraftmaschine mit einer Kraftstoffdirekteinspritzung, das einen Speicher umfasst, auf dem ein vorstehend beschriebenes Computerprogramm abgespeichert ist.

Schließlich umfasst die Erfindung eine Brennkraftmaschine mit einem Brennraum, mit einer Kraftstoffdirekteinspritzvorrichtung, über welche der Kraftstoff in den Brennraum gelangt, mit einem Steuer- und/oder Regelgerät sowie einem Drei-Wege-Katalysator und einem im Abgasstrom stromabwärts davon angeordneten NOₓ-Speicherkatalysator, wobei zum Heizen mindestens des NOₓ-Speicherkatalysators die Brennkraftmaschine zyklisch in Fett- und Magerphasen betreibbar ist und nach und/oder zwischen den Katalysatoren ein Sauerstoffsensor vorgesehen ist, zum Bestimmen der Länge und/oder Intensität der Fett- und/oder Magerphasen, wobei über das Regel- und/oder Steuergerät durch Regelung der Phasendauer, der Amplitude des Luft-/Kraftstoffverhältnisses und/oder der Absteuerung der Phasen ein im Mittel stöchiometrisches Lambda einregelbar ist.

Bei der Brennkraftmaschine kann es sich dabei insbesondere um einen Ottomotor handeln. Das Steuer- und/oder Regelgerät kann dabei ein vorstehend beschriebenes Steuer- und/oder Regelgerät mit einem Computerprogramm zur Ausführung des Verfahrens, das vorstehend beschrieben ist, sein.

Des weiteren kann die Brennkraftmaschine einen Temperatursensor insbesondere am Ausgang des NOₓ-Speicherkatalysators zur Überwachung der Heizmaßnahmen und zur Regelung derselben umfassen. Die Regelung und/oder Überwachung kann dabei auf folgende Weise erfolgen:
- Es kann vor Einleiten der Heizmaßnahmen sichergestellt werden, dass der Katalysator eine ausreichende Temperatur erreicht hat, nämlich die sogenannte "Light-off-Temperatur". Ist die Light-off-Temperatur noch nicht erreicht, kann diese durch thermische Heizmaßnahmen, z. B. eine verspätete Zündung, erreicht werden.
- Falls trotz eingeleiteter Heizmaßnahme keine Temperaturerhöhung festgestellt wird, ist entweder die Light-off-Temperatur noch nicht erreicht, beispielsweise wegen einer zu großen Geschwindigkeit des Abgases oder der Katalysator bzw. der Temperatursensor ist defekt. Die weitere Heizmaßnahme wird dann aus Emissionsgründen verringert oder verhindert.
- Durch die Temperaturmessung kann darüber hinaus der eingetragene Wärmestrom in den Katalysator bestimmt werden. Dadurch kann die Temperatur im Katalysator genauer überwacht werden und es kann ein Überhitzen des Katalysators verhindert werden. Hierdurch kann das Aufheizen in kürzerer Zeit mit mehr chemische Energie und damit weniger Wärmeverlust und gleichzeitig weniger Kraftstoffverbrauch ermöglicht werden.

Die Erfindung soll im Folgenden anhand eines Ausführungsbeispiels näher erläutert werden. Dabei zeigen:
- Figur 1: eine schematische Darstellung eines Abgassystems einer Brennkraftmaschine und
- Figur 2: den zeitlichen Ablauf der Fett- und Magerphasen, sowie einer Hilfsgröße mₒ₂ mit der dieser zeitliche Ablauf geregelt wird.

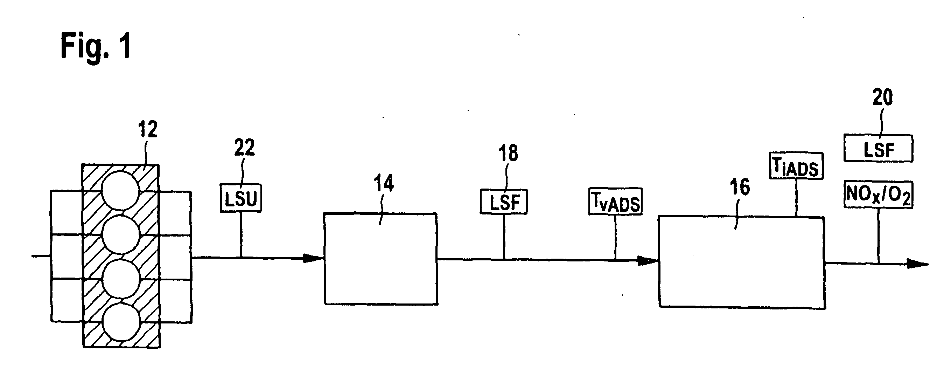

Figur 1 zeigt eine schematische Darstellung des Abgassystems einer Brennkraftmaschine umfassend einen Motor 12, einen Drei-Wege-Katalysator 14 sowie einen NOₓ-. Speicherkatalysator 16, der stromabwärts im Abgasstrom hinter dem Motor 12 und dem Drei-Wege-Katalysator 14 angeordnet ist. Hinter dem Drei-Wege-Katalysator 14 sowie dem NOₓ-Speicherkatalysator 16 sind Sauerstoffsensoren (LSF) 18, 20 angeordnet, mit denen Durchbrüche der Fett- bzw. Magerphasen durch die Katalysatoren 14, 16 gemessen werden können. Über die Messung dieser Fett- bzw. Magerdurchbrüche der Betriebsmodi durch die Katalysatoren 14 und 16 kann die Länge sowie die Intensität der Fett- und/oder Magerphasen während des zyklischen Aufheizens des NOₓ-Speicherkatalysators 16 geregelt werden, so dass im normalen Heizbetrieb keine Durchbrüche der Phasen erfolgen. Dies ist erwünscht, weil durch die Durchbrüche die Emissionen verschlechtert werden. Ein weiterer Sensor 22 befindet sich unmittelbar am Motorausgang und ist mit LSU gekennzeichnet. Die Regelungsstrategie erfolgt dabei wie vorstehend beschrieben. Darüber hinaus sind Temperatursensoren T_{vADS} und T_{iADS} vorgesehen, die die Temperatur zu Beginn und am Ende des Speicherkatalysators 16 messen. Über diese Temperaturmessung kann sichergestellt werden, dass zum einen der gesamte Katalysator 16 geheizt wird und nicht nur die vorderen Bereiche desselben. Zusätzlich kann sichergestellt werden, dass der heißeste Punkt, also das Ende eines gewünschten Reaktionsbereichs, am Anfang des Katalysators 16 liegt und damit ein möglichst gleichmäßiges Temperaturprofil für die Entschwefelung erreicht werden kann. Darüber hinaus können durch den Temperatursensor erlangte Daten dazu verwendet werden, das Steuerungsmodell besser an die Temperaturabhängigkeit anzupassen. Eine Adaption des Modells während des Betriebs ist daher möglich.

Schließlich kann durch Messung der Temperatur die Aufheizung schneller erfolgen, da durch kurze Wechsel in kürzerer Zeit die gleiche chemische Energie eingetragen werden kann. Eine Überhitzung des Katalysators kann auf diese Weise jedoch sicher vermieden werden.

Wird nun ca. alle 1.000 bis alle 10.000 Kilometer eine Entschwefelung des Katalysators 16 fällig, so wird der Motor 12 über die Motorsteuerung (nicht dargestellt) in relativ kurzen Wechseln in Fett- und Magerbetriebsphasen betrieben. Diese Phasen sind dabei so eingestellt, dass sie durch den Drei-Wege-Katalysator 14 durchschlagen. Die durch den Drei-Wege-Katalysator 14 durchschlagende Magerphase, die den NOₓ-Speicherkatalysator 16 erreicht, führt aufgrund des Sauerstoffüberschusses zu einem Auffüllen des Sauerstoffspeichers des NOₓ-Speicherkatalysators 16. Es ist hierbei wichtig, dass die Magerphase kurz gestaltet ist und mit einem möglichst großen Sauerstoffüberschuss gefahren wird, um in kurzer Zeit ein Auffüllen des Sauerstoffspeichers des NOₓ-Speicherkatalysators 16 zu erreichen, da eine länger andauernde Magerphase zu einer Abkühlung des Katalysators führen würde.

Danach wird der Motor in einer Fettphase betrieben, d. h. mit einem λ < 1, also einem Sauerstoffmangel. Auch diese Fettphase schlägt durch den Drei-Wege-Katalysator 14 durch und erreicht den NOₓ-Speicherkatalysator 16. Aufgrund der bestehenden unverbrannten Schadstoffkomponenten (Kohlenwasserstoffe, Kohlenmonoxid und Wasserstoff) erfolgt eine Reaktion derselben mit dem gespeicherten Sauerstoff im NOₓ-Speicherkatalysator 16, wobei diese Reaktionen exotherm ablaufen und hierüber den Katalysator 16 aufheizen. Idealerweise wird der gesamte freie Speicher für Sauerstoff während der Magerphase des NOₓ-Speicherkatalysators 16 mit Sauerstoff belegt und während der Fettphase bis zu einem gewünschten Anteil entleert. Hierbei ist es wünschenswert, wenn die Phasen nicht durch den NOₓ-Speicherkatalysator 16 durchschlagen, damit die Abgaswerte stromabwärts der Katalysatoren nicht verschlechtert werden.

Entsprechend einem theoretischen Modell werden die Fettund Magerphasen vorgesteuert. Zusätzlich ist vorgesehen, gemäß der Erfindung die Fett- und/oder Magerphasen zu regeln, um beispielsweise eine Anpassung an die verschlechterte Sauerstoffspeicherfähigkeit der Katalysatoren 14 und 16 im Zuge der Alterung zu erreichen. Hierzu ist hinter dem NOₓ-Speicherkatalysator stromabwärts ein Sensor für die Sauerstoffkonzentration 20 vorgesehen und ca. alle 200 Zyklen während der Aufheizung erfolgt ein Regelungsabschnitt, d. h., dass entweder eine Fett- oder eine Magerphase bzw. beide so eingestellt werden, dass sie durch den NOₓ-Speicherkatalysator 16 durchbrechen und am Ende desselben messbar sind.

Bricht eine Magerphase durch den entsprechenden Katalysator durch, so kann aufgrund des durchbrechenden Magerpakets die aktuelle Sauerstoffspeicherfähigkeit der Katalysatoren 14, 16 genau bestimmt werden. Analog gilt dies für den Sauerstoffsensor 18, der zwischen den Katalysatoren 14, 16 angeordnet ist und über den eine Sauerstoffspeicherfähigkeit des Drei-Wege-Katalysators 14 bestimmt werden kann. Aufgrund der aktuellen Sauerstoffspeicherfähigkeit kann auf die Fettphase geschlossen werden.

Bricht eine Fettphase durch, so kann hierdurch der reduzierte Sauerstoff bestimmt werden und die zeitliche Steuerung der Magerphase kann so ausgelegt werden, dass nur diese Sauerstoffmenge - oder ein bestimmter Anteil dieser Menge - wieder ersetzt wird. Die bestmögliche Regelung ergibt sich dadurch, dass sowohl eine Fett- als auch eine Magerphase durchbrechen, denn hierdurch kann ein Abgleich der beiden gegeneinander erfolgen.

Dasselbe kann analog durch die Sauerstoffsonde 18 erzielt werden, die zwischen den Katalysatoren angeordnet ist und dieselben Messwerte nur für den Drei-Wege-Katalysator 14 liefert.

Insgesamt erfolgt die Regelung der Fett- und der Magerphasen unabhängig voneinander, wobei versucht wird, die Pakete so minimal wie möglich zu halten, um die Abgaswerte innerhalb der geforderten und erwünschten Bereiche zu fahren.

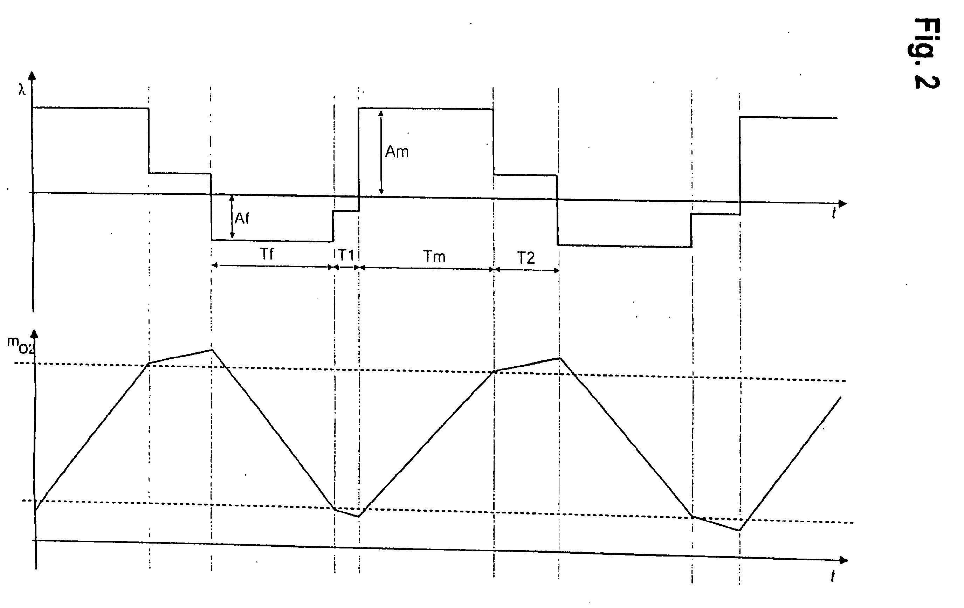

Da es nicht immer möglich ist, zwischen Fett- und Magerphase zu einem beliebig gewünschten bzw. optimalen Zeitpunkt umzuschalten, damit die Umschaltung für den Fahrer im Fahrbetrieb nicht spürbar ist, kann es erforderlich sein, eine Phase länger als eigentlich erwünscht und für die Emissionen günstig, beizubehalten. Dies gilt insbesondere, wenn für die Magerphase beispielsweise eine Umschaltung in den Schichtbetrieb notwendig wird, wohingegen in der Fettphase der Motor im homogenen Betrieb betrieben wird. Durch die Umschaltung sind Momentensprünge spürbar, denen jedoch mit einer entsprechenden Regelstrategie, wie Verschiebung des Zündungstimings sowie des Einspritzwinkels etc., entgegengewirkt werden kann. Des weiteren kann eine Absteuerung der Phasen vorgesehen werden. Dies ist in Figur 2 ersichtlich, die mit Af die Amplitude der Fettphase, wobei in der Graphik λ über die Zeit aufgetragen ist. Mit Am ist die Amplitude der Magerphase dargestellt. Die Zeiten Tf und Tm stellen die zeitlichen Längen der jeweiligen Fett- bzw. Magerpakete dar. Darüber hinaus kann eine Abregelphase T1 bzw. T2 vorgesehen sein, in der Lambda wieder nahe an den stöchiometrischen Wert von λ = 1 herangefahren wird. Kommt der Wechsel zwischen den Phasen dann später als erwünscht, werden trotzdem geringe Emissionen erzeugt, da bereits wieder bei einem Lambda nahe dem stöchiometrischen Wert gefahren wird. Grundsätzlich ist eine Absteuerung bis zum stöchiometrischen Wert möglich.

Durch die Absteuerung hat die zeitliche Länge der Fett- bzw. Magerphasen einen geringeren Einfluss auf die Emissionen. Die Abregelung besitzt jedoch keinen oder nur einen geringen Einfluss auf die Aufheizung des Katalysators bzw. die Bestimmung der Regelgrößen. Darüber hinaus kann auch mit Hilfe der Absteuerung eine weitere Regelung durch Variation der Zeiten T1 zu Tf bzw. T2 zu Tm vorgenommen werden. Darüber hinaus ist die Regelgröße (M₀₂) über die Zeit aufgetragen und in Relation zu den Phasen gesetzt, wobei anhand dieser Regelgröße die Entleerung und Beladung der Sauerstoffspeicher zu erkennen ist.

Weitere grundsätzliche Regeleingriffe ergeben sich durch die Variation der Fett- bzw. Mageramplitude Af und Am sowie die Variation der Zeiten Tf und Tm.

Mit Hilfe der Regelstrategie kann auf einfache Weise erreicht werden, dass Fett- und Magerdurchbrüche über den gesamten Betriebszeitraum eines Kraftfahrzeugs während des chemischen Katheizens weitgehend vermieden werden können.

## Patentansprüche

1. Verfahren zum Betreiben einer Brennkraftmaschine (12) mit einem Kraftstoffeinspritzsystem, umfassend ein Abgassystem mit mindestens einem eine Sauerstoff-Speicherfähigkeit aufweisenden Katalysator (14, 16), wobei zum Heizen von wenigstens einem Katalysator (14, 16) vorgesehen ist, die Brennkraftmaschine (12) zyklisch im Magerbetrieb mit λ > 1, um den Sauerstoffspeicher des mindestens einen, eine Sauerstoffspeicherfähigkeit aufweisenden Katalysators (14, 16) aufzufüllen und im fetten Betrieb mit λ < 1 zu betreiben, um durch die Reaktionswärme der Reaktion nicht verbrannter Kraftstoffkomponenten mit dem Sauerstoff im eine Sauerstoffspeicherfähigkeit aufweisenden Katalysator (14, 16) diesen aufzuheizen, **dadurch gekennzeichnet, dass** der während einer Magerphase eingetragene Sauerstoff und/oder der in einer Fettphase verbrauchte Sauerstoff über einen Sauerstoffsensor (18, 20) hinter den oder dem Katalysator(en) (14, 16) und aus dem λ der Brennkraftmaschine vor dem oder den Katalysator(en) (14, 16) und dem Abgasmassenstrom die Sauerstoffspeicherfähigkeit bestimmt wird, und wobei die andere Phase über λ, und den Abgasmassenstrom so gesteuert wird, dass der Sauerstoffspeicher aufgefüllt oder verbraucht wird, wobei die Zeitdauer der zyklischen Phasen derart angepasst wird, dass entsprechend dem aktuellen Abgasmassenstrom der absolut überschüssige Sauerstoff und der absolute Sauerstoffbedarf der unverbrannten Kraftstoffkomponenten je zyklischer Phase in einem festen Verhältnis stehen.

2. Verfahren nach Anspruch 1, **dadurch gekennzeichnet, dass** der absolut überschüssige Sauerstoff der Magerphase abhängig von der Sauerstoff-Speicherfähigkeit wenigstens eines der Katalysatoren (14, 16) vorgesteuert wird, um ein gewünschtes Temperaturprofil zur Aufheizung der oder des Katalysators (14, 16) zu erreichen.

3. Verfahren nach Anspruch 1 oder 2, **dadurch gekennzeichnet, dass** der absolute Sauerstoffbedarf der Fettphase abhängig von der Sauerstoff-Speicherfähigkeit wenigstens eines der Katalysatoren (14, 16) vorgesteuert wird, um ein gewünschtes Temperaturprofil zur Aufheizung des oder der Katalysatoren (14, 16) zu erreichen.

4. Verfahren nach einem der Ansprüche 1 bis 3, **dadurch gekennzeichnet, dass** die Sauerstoff-Speicherfähigkeit durch einen Durchbruch von Sauerstoff während einer Magerphase mit mindestens einem Sauerstoff-Sensor (18, 20) nach einem Katalysator (14, 16) gemessen wird.

5. Verfahren nach einem der Ansprüche 1 bis 4, **dadurch gekennzeichnet, dass** die Sauerstoff-Speicherfähigkeit durch einen Durchbruch von unverbranntem Kraftstoff während einer Fettphase mit mindestens einem Sauerstoff-Sensor (18, 20) nach einem Katalysator (14, 16) gemessen wird.

6. Verfahren nach Anspruch 4 oder 5, **dadurch gekennzeichnet, dass** zur Messung der Sauerstoff-Speicherfähigkeit ein Durchbruch nicht in jeder Phase sondern jeweils nach Ablauf von mehreren Phasen ohne Durchbruch erzeugt wird.

7. Verfahren nach einem der vorhergehenden Ansprüche, **dadurch gekennzeichnet, dass** das Verhältnis von Sauerstoff-Überschuss und Sauerstoff-Bedarf der beiden Phasen 1 ist (λ=1).

8. Verfahren nach einem der vorangehenden Ansprüche, **dadurch gekennzeichnet, dass** der relative Sauerstoff-Überschuss der Magerphase (Lambda) möglichst mager gewählt wird, um ein Auskühlen des oder der Katalysatoren (14, 16) zu verhindern bei gleichzeitig noch sicherer Magerlauffähigkeit im Betrieb.

9. Verfahren nach einem der vorangehenden Ansprüche, **dadurch gekennzeichnet, dass** die zeitliche Vorsteuerung eine Absteuerung der Fett- und/oder Magerphasen vornimmt, indem ein Lambda-Wert eingestellt wird, der näher am stöchiometrischen Verhältnis liegt, als der Wert der.Amplitude der Fett- und/oder Magerphasen um den Durchbruch der jeweiligen Phase zu minimieren.

10. Verfahren nach einem der vorangehenden Ansprüche, **dadurch gekennzeichnet, dass** mindestens zwei Katalysatoren vorgesehen sind und die Sauerstoffkonzentration zwischen den Katalysatoren gemessen wird und zur Bestimmung der Sauerstoffspeicherfähigkeit verwendet wird.

11. Verfahren nach einem der vorangehenden Ansprüche, **dadurch gekennzeichnet, dass** die Sauerstoffkonzentration im Abgasstrom gemessen und das Lambda in den Phasen unter Berücksichtigung dieses Wertes geregelt wird.

12. Verfahren nach einem der vorangehenden Ansprüche, bei dem die Temperatur an einem oder mehreren zu heizenden Katalysatoren (14, 16) gemessen wird, um die Heizmaßnahmen zu überwachen und zu regeln.

13. Verfahren nach einem der vorangehenden Ansprüche, d**adurch gekennzeichnet, dass** in der Magerphase die Brennkraftmaschine mit Ladungsschichtung und in der Fettphase mit homogener Gemischverteilung betrieben wird.

14. Verfahren nach einem der Ansprüche 1 bis 12, **dadurch gekennzeichnet, dass** die Brennkraftmaschine (12) stets mit Ladungsschichtung betrieben wird und die Fettphase durch eine zusätzliche Kraftstoffeinspritzung nach der Zündung erzeugt wird.

15. Computerprogramm, wobei das Computerprogramm zur Durchführung des Verfahrens nach einem der vorangehenden Ansprüche geeignet ist, wenn es auf einem Computer ausgeführt wird.

16. Computerprogramm nach Anspruch 15, **dadurch gekennzeichnet, dass** es auf einem Speicher, insbesondere einem Read-only-Memory oder einem Flash-Memory abgespeichert ist.

17. Steuer- und/oder Regelgerät zum Betreiben einer Brennkraftmaschine (12) mit Kraftstoffdirekteinspritzung, das einen Speicher umfasst, auf dem ein Computerprogramm nach einem der Ansprüche 15 oder 16 abgespeichert ist.

18. Brennkraftmaschine mit einem Brennraum, mit einer Kraftstoffeinspritzvorrichtung, über welche der Kraftstoff in den Brennraum gelangt, mit einem Steuer- und/oder Regelgerät sowie wenigstens einem Katalysator (14, 16), wobei zum Heizen zumindest eines der Katalysatoren (14, 16) die Brennkraftmaschine (12) zyklisch in Fett- und Magerphasen betreibbar ist und nach und/oder zwischen den Katalysatoren ein Sauerstoffsensor (LSF) vorgesehen ist, zum Bestimmen der Länge und/oder Intensität der Fett- und/oder Magerphasen und wobei über das Regel- und/oder Steuergerät insbesondere durch Regelung der Phasendauer, der Amplitude des Luft/Kraftstoffverhältnisses und/oder der Absteuerung der Phasen ein im Mittel konstantes Lambda einregelbar ist, zur Durchführung des Verfahrens nach einem der Ansprüche 1 -14.

19. Brennkraftmaschine nach Anspruch 18, **dadurch gekennzeichnet, dass** die Brennkraftmaschine (12) ein Ottomotor ist.

20. Brennkraftmaschine nach Anspruch 18 oder 19, **dadurch gekennzeichnet dass** mehrere Katalysatoren (14,16) hintereinander geschaltet sind und dass mindestens einer dieser Katalysatoren ein NOx-Speicherkatalysator (16) ist.

21. Brennkraftmaschine nach einem der Ansprüche 18 bis 20, die ein Steuer- und/oder Regelgerät nach Anspruch 17 umfasst.

## Claims

1. Method for operating an internal combustion engine (12) having a fuel injection system, comprising an exhaust system with at least one catalytic converter (14, 16) which has an oxygen storage capacity, with it being provided, for heating at least one catalytic converter (14, 16), to operate the internal combustion engine (12) cyclically in the lean mode with λ > 1, in order to fill the oxygen store of the at least one catalytic converter (14, 16) which has an oxygen storage capacity, and in the rich mode with λ < 1, in order to heat the catalytic converter (14, 16) which has an oxygen storage capacity by means of the reaction heat from the reaction of unburned fuel components with the oxygen in said catalytic converter (14, 16), **characterized in that** the oxygen which is introduced during a lean phase and/or the oxygen consumed in a rich phase is determined by means of an oxygen sensor (18, 20) downstream of the catalytic converter(s) (14, 16), and the oxygen storage capacity is determined from the λ of the internal combustion engine upstream of the catalytic converter(s) (14, 16) and the exhaust-gas mass flow, and with the other phase being controlled by means of λ and the exhaust-gas mass flow such that the oxygen store is filled or exhausted, with the time duration of the cyclic phases being adapted such that, corresponding to the present exhaust-gas mass flow, the absolute excess oxygen and the absolute oxygen demand of the unburned fuel components are in a fixed ratio per cyclic phase.

2. Method according to Claim 1, **characterized in that** the absolute excess oxygen of the lean phase is pilot-controlled as a function of the oxygen storage capacity of at least one of the catalytic converters (14, 16) in order to obtain a desired temperature profile for heating the catalytic converter(s) (14, 16).

3. Method according to Claim 1 or 2, **characterized in that** the absolute oxygen demand of the rich phase is pilot-controlled as a function of the oxygen storage capacity of at least one of the catalytic converters (14, 16) in order to obtain a desired temperature profile for heating the catalytic converter(s) (14, 16) .

4. Method according to one of Claims 1 to 3, **characterized in that** the oxygen storage capacity is measured, by means of a breakthrough of oxygen during a lean phase, using at least one oxygen sensor (18, 20) downstream of a catalytic converter (14, 16).

5. Method according to one of Claims 1 to 4, **characterized in that** the oxygen storage capacity is measured, by means of a breakthrough of unburned fuel during a rich phase, using at least one oxygen sensor (18, 20) downstream of a catalytic converter (14, 16).

6. Method according to Claim 4 or 5, **characterized in that**, for measuring the oxygen storage capacity, a breakthrough is generated not in every phase but rather in each case after the expiry of a plurality of phases without a breakthrough.

7. Method according to one of the preceding claims, **characterized in that** the ratio of oxygen excess and oxygen demand of the two phases 1 is (λ=1).

8. Method according to one of the preceding claims, **characterized in that** the relative oxygen excess of the lean phase (lambda) is selected to be as lean as possible in order to prevent cooling of the catalytic converter(s) (14, 16) while providing a simultaneously even more reliable lean running capability in operation.

9. Method according to one of the preceding claims, **characterized in that** the temporary pilot control carries out a termination of the rich and/or lean phases by virtue of a lambda value being set which is closer to the stoichiometric ratio than the value of the amplitude of the rich and/or lean phases in order to minimize the breakthrough of the respective phase.

10. Method according to one of the preceding claims, **characterized in that** at least two catalytic converters are provided and the oxygen concentration between the catalytic converters is measured and used to determine the oxygen storage capacity.

11. Method according to one of the preceding claims, **characterized in that** the oxygen concentration in the exhaust-gas flow is measured and the lambda is regulated in the phases taking into consideration said value.

12. Method according to one of the preceding claims, in which method the temperature at one or more catalytic converters (14, 16) to be heated is measured in order to monitor and regulate the heating measures.

13. Method according to one of the preceding claims, **characterized in that** the internal combustion engine is operated with charge stratification in the lean phase and with homogeneous mixture distribution in the rich phase.

14. Method according to one of Claims 1 to 12, **characterized in that** the internal combustion engine (12) is operated with charge stratification at all times and the rich phase is generated by means of an additional fuel injection after the ignition.

15. Computer program, with the computer program being suitable for carrying out the method according to one of the preceding claims if it is executed on a computer.

16. Computer program according to Claim 15, **characterized in that** said computer program is stored on a memory, in particular a read-only memory or a flash memory.

17. Control and/or regulating unit for operating an internal combustion engine (12) with direct fuel injection, which control and/or regulating unit comprises a memory on which is stored a computer program according to one of Claims 15 or 16.

18. Internal combustion engine having a combustion chamber, having a fuel injection device, by means of which fuel passes into the combustion chamber, having a control and/or regulating unit, and having at least one catalytic converter (14, 16), with it being possible, for heating at least one of the catalytic converters (14, 16), for the internal combustion engine (12) to be operated cyclically in rich and lean phases, and with an oxygen sensor (LSF) for determining the length and/or intensity of the rich and/or lean phases being provided downstream of and/or between the catalytic converters, and with it being possible to set a constant average lambda by means of the regulating and/or control unit, in particular by regulating the phase duration, the amplitude of the air/fuel ratio and/or the termination of the phases, for carrying out the method according to one of Claims 1-14.

19. Internal combustion engine according to Claim 18, **characterized in that** the internal combustion engine (12) is a spark-ignition engine.

20. Internal combustion engine according to Claim 18 or 19, **characterized in that** a plurality of catalytic converters (14, 16) are connected in series and **in that** at least one of said catalytic converters is a NOx storage catalytic converter (16).

21. Internal combustion engine according to one of Claims 18 to 20, which internal combustion engine comprises a control and/or regulating unit according to Claim 17.

## Revendications

1. Procédé de gestion d'un moteur à combustion interne (12) équipé d'un système d'injection de carburant, comprenant un système de gaz d'échappement avec au moins un catalyseur (14, 16) ayant une capacité d'accumulation d'oxygène, et pour chauffer au moins un catalyseur (14, 16), le moteur à combustion interne (12) fonctionne cycliquement en mode maigre avec λ > 1 pour remplir l'accumulateur d'oxygène d'au moins un catalyseur (14, 16) ayant une capacité d'accumulation d'oxygène et en mode riche avec λ < 1 pour que par la chaleur de réaction dégagée par la réaction des composants de carburant imbrulés, avec l'oxygène dans le catalyseur (14, 16) ayant une capacité d'accumulation d'oxygène pour être chauffé,
**caractérisé en ce que**
l'oxygène apporté au cours de la phase maigre et/ou l'oxygène consommé pendant la phase riche sont déterminés par un capteur d'oxygène (18, 20) en aval du ou des catalyseurs (14, 16) et à partir du coefficient λ du moteur à combustion interne en amont du ou des catalyseurs (14, 16) et du débit massique de gaz d'échappement, on détermine la capacité d'accumulation d'oxygène, et
on commande l'autre phase par le coefficient λ et le débit massique des gaz d'échappement pour remplir l'accumulateur d'oxygène ou le consommer et la durée des phases cycliques est adaptée pour qu'en fonction du débit massique actuel des gaz d'échappement, l'oxygène excédentaire en absolu et la consommation absolue d'oxygène des composants de carburant imbrûlés soient dans un rapport fixe par phase cyclique.

2. Procédé selon la revendication 1,
**caractérisé en ce que**
l'oxygène en excédent, en absolu, de la phase maigre est commandé préalablement en fonction de la capacité d'accumulation d'oxygène d'au moins l'un des catalyseurs (14, 16) pour obtenir un profil de température souhaité pour chauffer le ou les catalyseurs (14, 16).

3. Procédé selon la revendication 1 ou 2,
**caractérisé en ce que**
la demande absolue en oxygène de la phase riche est commandée préalablement en fonction de la capacité d'accumulation d'oxygène d'au moins l'un des catalyseurs (14, 16) pour obtenir un profil de température souhaité pour chauffer le ou les catalyseurs (14, 16).

4. Procédé selon l'une des revendications 1 à 3,
**caractérisé en ce que**
la capacité d'accumulation d'oxygène est mesurée par le passage d'oxygène au cours de la phase maigre avec au moins un capteur d'oxygène (18, 20) après le catalyseur (14, 16).

5. Procédé selon l'une des revendications 1 à 4,
**caractérisé en ce qu'**
on mesure la capacité d'accumulation d'oxygène par un passage de carburant imbrûlé au cours d'une phase riche avec au moins un capteur d'oxygène (18, 20) en aval du catalyseur (14, 16).

6. Procédé selon l'une des revendications 4 ou 5,
**caractérisé en ce que**
pour mesurer la capacité d'accumulation d'oxygène on génère un passage non pas dans chaque phase mais chaque fois à la fin de plusieurs phases sans passage.

7. Procédé selon l'une des revendications précédentes,
**caractérisé en ce que**
le rapport entre l'excédent d'oxygène et la demande en oxygène des deux phases est égal à 1 (λ = 1).

8. Procédé selon l'une des revendications précédentes,
**caractérisé en ce que**
l'excédent relatif en oxygène de la phase maigre (λ) est choisi aussi maigre que possible pour éviter le refroidissement du ou des catalyseurs (14, 16) tout en garantissant en même temps la possibilité de fonctionnement avec un mélange maigre.

9. Procédé selon l'une quelconque des revendications précédentes,
**caractérisé en ce que**
la commande préalable dans le temps effectue une fin de commande des phases riche et/ou pauvre en réglant un coefficient lambda situé plus près du rapport stoechiométrique que la valeur de l'amplitude des phases riche et/ou maigre, pour minimiser le passage de la phase respective.

10. Procédé selon l'une des revendications précédentes,
**caractérisé par**
au moins deux catalyseurs et on mesure la concentration en oxygène entre les catalyseurs et on l'utilise pour déterminer la capacité d'accumulation d'oxygène.

11. Procédé selon l'une quelconque des revendications précédentes,
**caractérisé en ce qu'**
on mesure la concentration en oxygène dans la veine des gaz d'échappement et on règle le coefficient lambda dans les phases en tenant compte de cette valeur.

12. Procédé selon l'une quelconque des revendications précédentes,
**caractérisé en ce qu'**
on mesure la température sur un ou plusieurs catalyseurs à chauffer (14, 16) pour surveiller les mesures de chauffage.

13. Procédé selon l'une quelconque des revendications précédentes,
**caractérisé en ce que**
dans la phase maigre on fait fonctionner le moteur à combustion interne avec une stratification de charge et dans la phase riche, on le fait fonctionner avec une distribution homogène du mélange.

14. Procédé selon l'une des revendications 1 à 12,
**caractérisé en ce qu'**
on fait fonctionner le moteur à combustion interne (12) toujours avec une stratification de charge et on génère la phase riche par une injection supplémentaire de carburant après l'allumage.

15. Programme d'ordinateur conçu pour effectuer le procédé selon l'une des revendications précédentes lorsqu'il est exécuté sur un ordinateur.

16. Programme d'ordinateur selon la revendication 15,
**caractérisé en ce qu'**
il est enregistré dans une mémoire, notamment une mémoire morte ou une mémoire flash.

17. Appareil de commande et/ou de régulation pour gérer un moteur à combustion interne (12) à injection directe de carburant, comportant une mémoire contenant un programme d'ordinateur selon l'une des revendications 15 ou 16.

18. Moteur à combustion interne comportant une chambre de combustion équipée d'un dispositif d'injection de carburant par lequel du carburant arrive dans la chambre de combustion, un appareil de commande et/ou de régulation et au moins un catalyseur (14, 16) et pour chauffer au moins le catalyseur (14, 16), on fait fonctionner le moteur à combustion interne (12) cycliquement en phase riche et en phase pauvre et après et/ou entre les catalyseurs il y a un capteur d'oxygène (LSF) pour déterminer la longueur et/ou l'intensité de la phase riche et/ou maigre et par l'appareil de commande et/ou de régulation notamment par la régulation de la durée de la phase, de l'amplitude du rapport air/carburant et/ou de la fin de commande des phases, on règle en moyenne un coefficient lambda constant, pour la mise en oeuvre du procédé selon l'une des revendications 1 à 14.

19. Moteur à combustion interne selon la revendication 18,
**caractérisé en ce que**
le moteur à combustion interne (12) est un moteur à essence.

20. Moteur à combustion interne selon la revendication 18 ou 19,
**caractérisé en ce que**
plusieurs catalyseurs (14, 16) sont branchés l'un derrière l'autre et au moins l'un de ces catalyseurs est un catalyseur accumulateur d'oxydes d'azote Noₓ (16).

21. Moteur à combustion interne selon l'une des revendications 18 à 20, comportant un appareil de commande et/ou de régulation selon la revendication 17.
